**Europäisches Patentamt**

**European Patent Office**

**Office européen des brevets**

(19)

(11) Veröffentlichungsnummer: **0 465 809 A2**

(12) ## EUROPÄISCHE PATENTANMELDUNG

(21) Anmeldenummer: **91108504.1**

(22) Anmeldetag: **25.05.91**

(51) Int. Cl.5: **G11B 33/02, A47F 5/00**

(30) Priorität: **12.07.90 DE 4022182**

(43) Veröffentlichungstag der Anmeldung:
**15.01.92 Patentblatt 92/03**

(84) Benannte Vertragsstaaten:
**CH ES FR IT LI NL**

(71) Anmelder: **Rudolf Wittner GmbH u. Co.**
**Bühlbergstrasse 6**
**W-7972 Isny(DE)**

(72) Erfinder: **Vochezer,Georg**
**Christazhofen 123**
**W 7989 Argenbühl(DE)**

(74) Vertreter: **Hoeger, Stellrecht & Partner**
**Uhlandstrasse 14 c**
**W-7000 Stuttgart 1(DE)**

(54) **Stapelständer für Ton-, Bild und Datenträgerkassetten.**

(57) Ein Stapelständer für Ton-, Bild- und Datenträgerkassetten umfaßt wenigstens zwei im wesentlich vertikal stehende Seitenstützen und wenigstens einen an diesen Seitenstützen gehaltenen, im wesentlich horizontal verlaufenden Kassettenträger, wobei der Kassettenträger als Winkelprofil mit zwei im wesentlichen rechtwinklig zueinander verlaufenden Schenkeln ausgebildet ist, und die Schenkel mit Bezug auf die Vertikale und Horizontale derart schräg verlaufen, daß eine auf dem Kassettenträger hochkant aufgesetzte Kassette durch die Wirkung ihres Eigengewichtes auf den Schenkeln gehalten ist. Die Seitenstützen weisen an ihren rückwärtigen Kanten zahnförmige Abstufungen auf. Der Kassettenträger ist im Scheitelbereich seiner Schenkel mit zwei beide Schenkel durchdringenden, an ihren beiden Enden geschlossenen Durchbrechungen versehen. Der Kassettenträger ist mit seinen Durchbrechungen so über die Seitenstützen geschoben, daß das oben liegende Ende der Durchbrechung auf einer Abstufung aufruht, und daß unten liegende Ende der Durchbrechung an der vorderen Kante der Seitenstütze anliegt.

FIG.2

Die Erfindung betrifft einen Stapelständer für Ton-, Bild- und Datenträgerkassetten mit wenigstens zwei im wesentlichen vertikal stehenden Seitenstützen mit wenigstens einem an diesen Seitenstützen gehaltenen, im wesentlichen horizontal verlaufenden Kassettenträger, wobei der Kassettenträger als Winkelprofil mit zwei im wesentlichen rechtwinklig zueinander verlaufenden Schenkeln ausgebildet ist, und die Schenkel derart geneigt sind, daß eine auf dem Kassettenträger hochkant aufgesetzte Kassette durch die Wirkung ihres Eigengewichtes von beiden Schenkeln gehalten ist.

Bekannte Stapelständer dieser Art für Kassetten haben häufig den Nachteil, daß sie nicht ausreichend variabel sind und so nicht allen an sie zu stellenden Wünschen gerecht werden. Selbst wenn der Abstand zwischen den Kassettenträgern bei bekannten Stapelständern einstellbar ist, sind die Ständer als Ganzes unzerlegbar, also starr und sperrig ausgebildet, so daß sie schwierig zu verpacken und zu verschicken sind.

Es ist Aufgabe der Erfindung, einen gattungsgemäßen Stapelständer in einfacher Weise derart zu verbessern, daß er leicht zusammensetzbar und zerlegbar ist, sowie der Vertikalabstand zwischen den einzelnen Kassettenträgern in einfacher Weise verändert werden kann.

Die Aufgabe wird erfindungsgemäß dadurch gelöst, daß die Seitenstützen an ihren rückwärtigen Kanten zahnförmige Abstufungen aufweisen, und der Kassettenträger im Scheitelbereich seiner Schenkel eine beide Schenkel durchdringende, an beiden Enden geschlossene Durchbrechung aufweist, und daß der Kassettenträger mit der Durchbrechung so über die Seitenstützen geschoben ist, daß das oben liegende Ende der Durchbrechung auf einer Abstufung aufruht und das unten liegende Ende der Durchbrechung an der vorderen Kante der Seitenstütze anliegt.

Die nachstehende Beschreibung einer bevorzugten Ausführungsform der Erfindung dient im Zusammenhang mit beiliegender Zeichnung der weiteren Erläuterung. Es zeigen:

Figur 1      einen Stapelständer in nach oben abgebrochener Vorderansicht;

Figur 2      eine Seitenansicht des Stapelständers in Richtung des Pfeiles A in Figur 1;

Figur 3      eine Schnittansicht entlang der Linie 3-3 in Figur 1;

Figur 4      eine explosionsartige, teilweise abgebrochene Darstellung des Stapelständers;

Figur 5      schaubildlich einen Kassettenträger;

Figur 6      eine Schnittansicht entlang der Linie 6-6 in Figur 4 und

Figur 7      eine Schnittansicht entlang der Linie 7-7 in Figur 3.

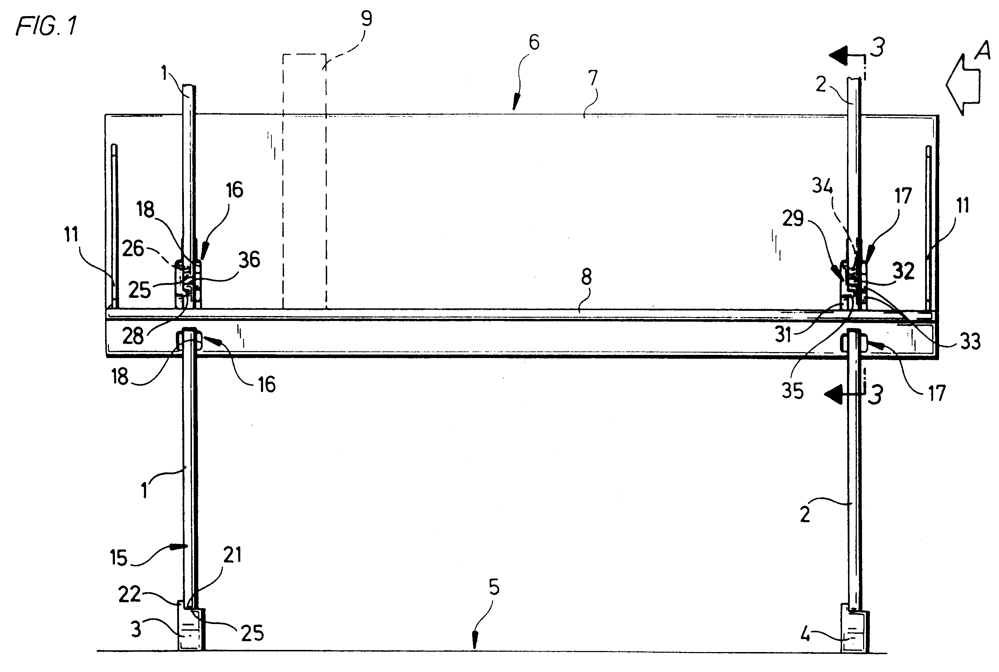

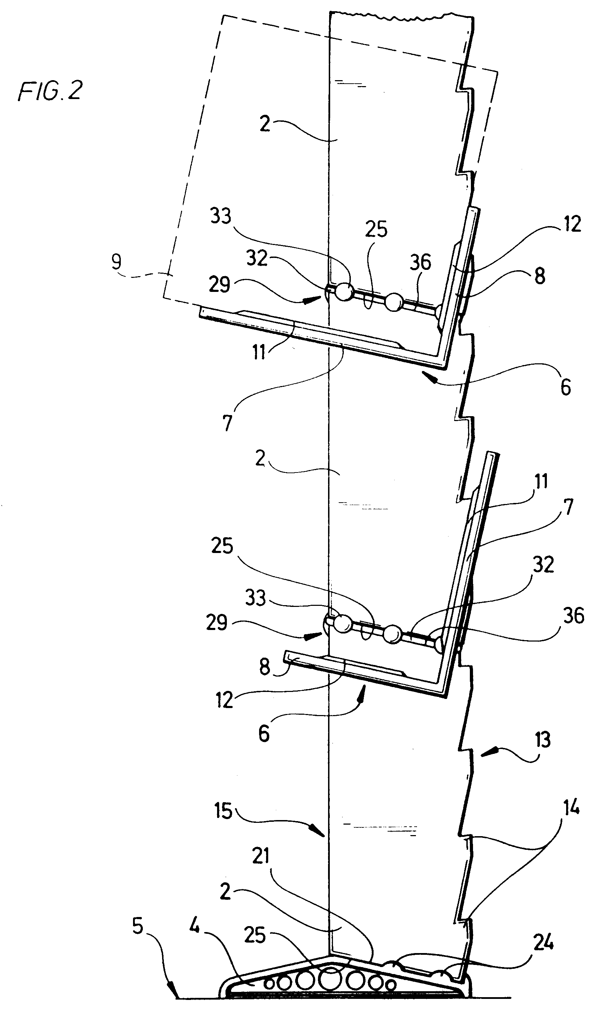

Wie auf der Zeichnung dargestellt, umfaßt ein Stapelständer für Ton-, Bild- und andere Datenträgerkassetten zwei im wesentlich vertikal stehende Seitenstützen 1, 2, die an ihren unteren Enden mit Füßen 3 bzw. 4 zum Aufstellen auf einer Unterlage 5 verbunden sind. An den Seitenstützen 1, 2 sind, im wesentlich horizontal verlaufend, rinnenförmige Kassettenträger 6 in noch zu beschreibender Weise derart gehalten, daß sie nach außen über die Seitenstützen 1, 2 überstehen. Jeder Kassettenträger 6 ist (vgl. Figur 2) als Winkelprofil mit zwei im wesentlichen rechtwinklig zueinander verlaufenden Schenkeln 7, 8 ausgebildet, wobei der Schenkel 7 länger als der Schenkel 8 ist. Wie insbesondere aus Figur 2 hervorgeht, verlaufen die Schenkel 7, 8 mit Bezug auf die Vertikale und Horizontale derart schräg, daß eine auf den Kassettenträger 6 hochkant aufgesetzte Kassette 9 durch die Wirkung ihres Eigengewichts (Schwerkraft) auf den eine Art Rinne bildenden Schenkeln gehalten ist, wobei die unten liegende Seite der Kassette auf dem nur geringfügig zur Horizontalen geneigten Schenkel des Kassettenträgers 6 aufliegt und die rückwärtige Kante der Kassette sich an dem zur Vertikalen nur geringfügig geneigten Schenkel des Kassettenträgers abstützt. In Figur 1 und 2 liegt die untere Seite der Kassette 9 auf dem Schenkel 8 auf, während sich ihre Rückseite am Schenkel 7 abstützt.

Die Kassetten 9 können auch im Bereich außerhalb der Seitenstützen 1 und 2, auf dem dort überstehenden Teil des Kassettenträgers 6 angeordnet werden. Um ein seitliches Abrutschen und Herunterfallen der Kassetten in diesem Bereich zu verhindern, weisen die Schenkel 7, 8 des Kassettenträgers 6 im Bereich ihrer äußeren Stirnseiten vorstehende Rippen 11, 12 auf.

Die Seitenstützen 1, 2 weisen, vgl. Figur 2, an ihren rückwärtigen Kanten 13 sägezahnförmige Abstufungen 14 auf. Die Vorderkante 15 der Seitenstützen 1, 2 ist demgegenüber glatt und eben ausgebildet.

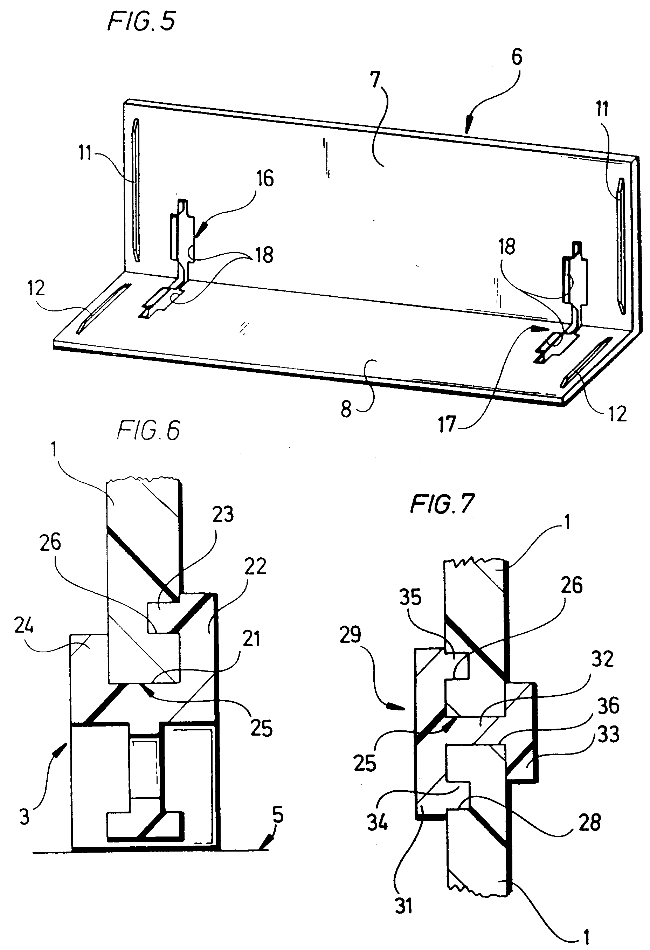

Der rinnenförmige Kassettenträger 6 (vgl. Figur 5) ist im Scheitelbereich seiner Schenkel 7, 8, also dort wo letztere zusammenstoßen, mit zwei beide Schenkel 7, 8 durchdringende, an ihren beiden Enden geschlossenen Durchbrechungen 16, 17 versehen. Die Durchbrechungen 16, 17 haben von den jeweiligen stirnseitigen Enden des Kassettenträgers 6 einen Abstand, der dem aus Figur 1 ersichtlichen, seitlichen Überstand des Kassettenträgers 6 über die Seitenstützen 1, 2 entspricht. Sie sind im wesentlichen schlitzförmig ausgebildet, haben jedoch im Bereich jedes Schenkels 7, 8 Erweiterungen 18, deren Zweck noch erläutert werden wird. Mit Hilfe der Durchbrechungen 16, 17 wird der Kassettenträger 6 derart über die beiden Seitenstützen 1, 2 geschoben, daß, wie aus Figur 2 ersichtlich, das oben liegende Ende der Durchbrechungen 16, 17 auf einer Abstufung 14 aufruht, und das unten liegende Ende der Durchbrechungen 16, 17 an der vorderen Kante 15 der Seitenstütze anliegt. Auf diese Weise sind die Kassettenträger 6 sicher mit den Seitenstützen 1, 2 verbunden. Die Breite der schlitzförmigen Durchbrechungen 16, 17 ist außerhalb der Erweiterungen 18 so gewählt, daß die Durchbrechungen praktisch ohne Spiel an den Seitenstützen 1, 2 anliegen, so daß hierdurch ein stabiler Verbund des Stapelständers gewährleistet ist. Die schwenkbare Einhängung der Kassettenträger 6 in die Abstufungen 14 erfolgt dabei derart, daß ein durch das Eigengewicht des Trägers 6 mit Bezug auf die Einhängestelle entstehendes Drehmoment den Kassettenträger 6 mit dem entsprechenden Ende der Durchbrechung 16, 17 in Anlage an der Vorderkante 15 der Seitenstützen 1, 2 hält.

Auf den Abstufungen 14 können mehrere Kassettenträger 6 übereinander in einem gewünschten Abstand angeordnet werden. In Figur 1 sind einem Kassettenträger 6 zwei Seitenstützen 1, 2 zugeordnet. Wenn ein Kassettenträger 6 mehr als zwei Durchbrechungen 16, 17 aufweist, kann er auch an mehr als zwei Seitenstützen 1, 2 befestigt werden.

Durch die einfache Einhängung der Kassettenträger 6 in die Abstufungen 14 können sie (durch entsprechende Verschwenkung und Verschiebung) leicht ausgeklinkt und in ihrer Höhenposition verändert werden.

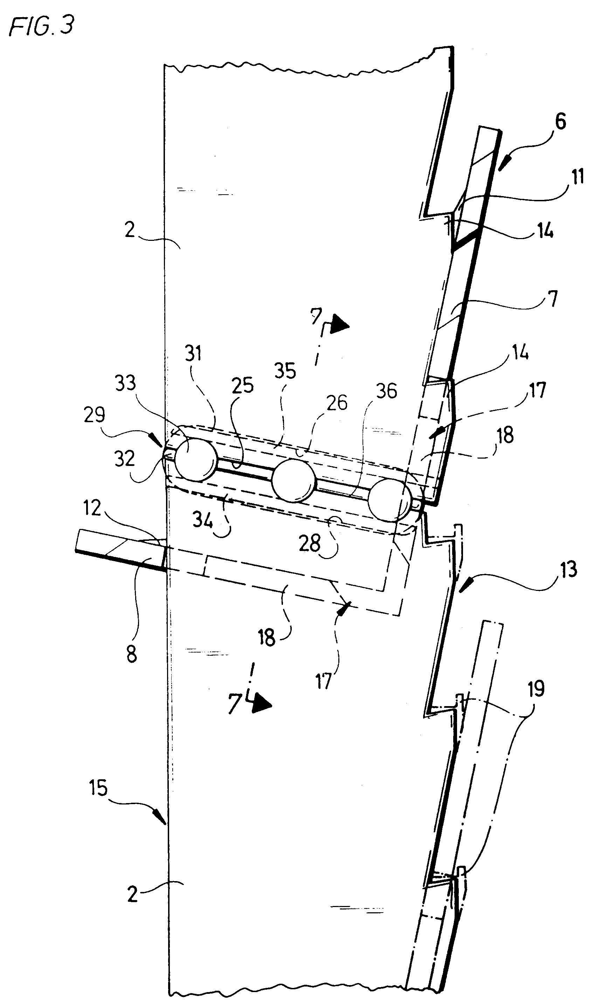

Die Abstufungen 14 können auch, wie in Figur 3 strichpunktiert angedeutet, an ihrem rückwärtigen Ende mit nach oben abstehenden Vorsprüngen 19 versehen werden, die ein unbeabsichtigtes Abrutschen der Kassettenträger 6 nach hinten zusätzlich verhindern. Normalerweise reicht jedoch die schräge Einhängung der Kassettenträger 6 auf den Abstufungen 14 und das Anlegen des vorderen Endes der Durchbrechungen 16, 17 an die Vorderkanten 15 der - plattenförmig ausgebildeten - Seitenstützen 1, 2 aus, um die Kassettenträger 6 zu fixieren (Figur 3).

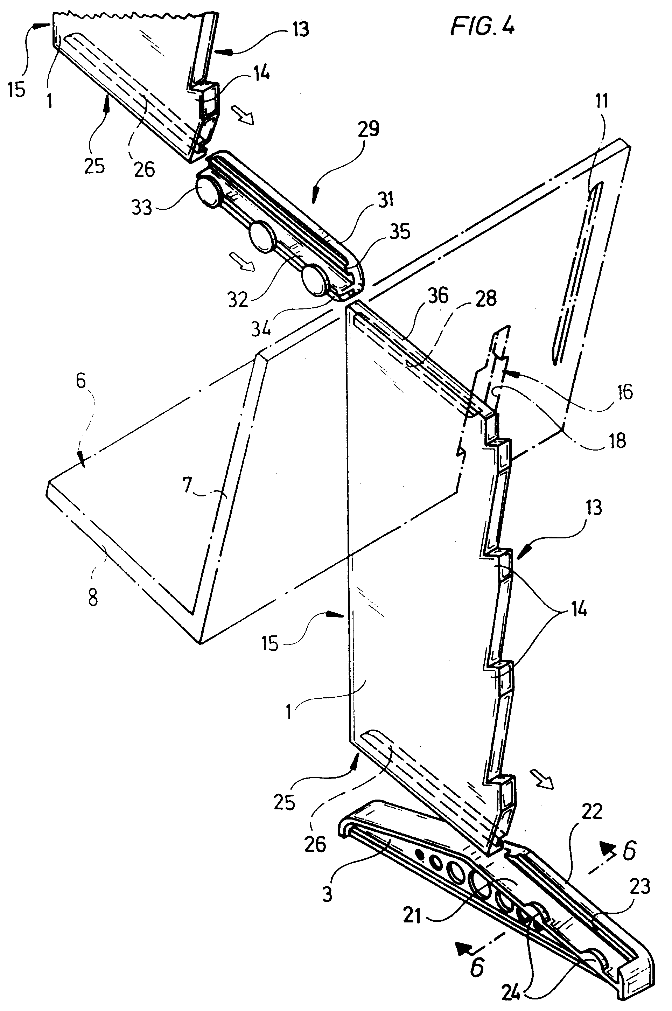

Die Figuren 4 und 6 zeigen die lös- und zerlegbare Verbindung einer Seitenstütze 1 mit dem Fuß 3. Der parallel zur Plattenebene der Seitenstütze 1 verlaufende, schwellenartige Fuß 3 weist eine schräg nach unten, rückwärts verlaufende Fläche 21 auf. Von einer senkrecht zu dieser Fläche 21 verlaufenden Seitenwand 22 steht nach einwärts ein Steg 23 parallel zur Fläche 21. Dem Steg 23 mit Abstand gegenüberliegend sind zwei nach oben parallel zur Seitenwand 22 verlaufende, halbrunde Führungsanschläge 24 vorgesehen. Der Innenabstand der Führungsanschläge 24 von der Seitenwand 22 entspricht der Plattendicke der Seitenstützen 1, 2.

Die Seitenstützen 1, 2 (vgl. Figur 4) weisen an ihrem unteren Ende eine Unterkante 25 auf, die mit der Vorderkante 15 einen Winkel von mehr als 90° einschließt. Der Überschuß über 90° entspricht dabei dem Neigungswinkel der Fläche 21. Wenn dementsprechend die Seitenstützen 1, 2 auf die Fläche 21 eines Fußes 3 aufgesetzt werden, und der Fuß auf einer horizontalen Unterlage 5 aufruht, verläuft die Vorderkante 15 der Seitenstützen vertikal.

Parallel zur Unterkante 25 ist auf einer Seite der Seitenstützen 1, 2 eine Nut 26 ausgebildet, die im Querschnitt dem Querschnitt des Steges 23 entspricht. Infolgedessen kann eine Seitenstütze 1, 2 formschlüssig zwischen die Seitenwand 22 und die Führungsanschläge 24 eingeschoben werden, wobei der Steg 23 formschlüssig in die Nut 26 eingreift. Somit ist ein stabiler, praktisch spielfreier Verbund der Seitenstützen 1, 2 mit den Füßen 3, 4 sichergestellt. Aufgrund der nach hinten schräg abwärts verlaufenden Fläche 21 sind dabei die Seitenstützen 1, 2 durch Schwerkraftwirkung an den Füßen 3, 4 gehalten und können sich ohne äußere Einwirkung von diesen nicht lösen. Die Nut 26 an den Seitenstützen 1, 2 ist an der rückwärtigen Kante 13 dieser Stützen offen und an der Vorderkante 15 geschlossen, so daß die Einführung der Seitenwände 1, 2 in die Füße 3, 4 mit der rückwärtigen Kante 13 erfolgen muß.

Es ist möglich, jeweils zwei Seitenstützen 1, 2 endseitig übereinander anzuordnen und zu verbinden, so daß auf diese Weise die Höhe des Stapelständers praktisch beliebig erweitert werden kann. Die technische Realisierung dieser Erweiterungsmöglichkeit wird anhand von Figur 3, 4 und 7 erläutert: Die Seitenstützen 1, 2 weisen jeweils an ihren oberen Enden weitere seitlich offene Nuten 28 auf, die parallel zu den an den unteren Enden vorgesehenen Nuten 26 verlaufen, jedoch im Gegensatz zu letzteren an der Vorderkante 15 der Seitenstützen 1, 2 offen und an den rückwärtigen Kanten 13 geschlossen sind. Die oberen Kanten der Seitenstützen 1, 2 verlaufen parallel zu den Nuten 28, ebenso wie die Unterkanten 25 parallel zu den unteren Nuten 26 verlaufen.

Zur endseitigen Verbindung zweier aufeinandergestellter Seitenstützen 1, 2 (vgl. Figur 3, 4 und 7) dient ein Verbindungsstecker 29. Dieser weist, wie am besten aus Figur 7 ersichtlich, einen von einer Seitenwand 31 abstehenden Mittelsteg 32 auf. Am Mittelsteg 32 sind im Abstand von der Seitenwand 31 und beidseits vom Mittelsteg 32 abstehend runde Führungsanschläge 33 vorgesehen, die den Führungsanschlägen 24 an der Schrägfläche 21 des Fußes 3 entsprechen (Figur 4). Von der Innenseite der Seitenwand 31 stehen zu den Führungsanschlägen 33 hin ein unterer Steg 34 sowie ein oberer Steg 35 ab, deren Querschnittsprofil dem Querschnitt der oberen bzw. unteren Nut 28, 26 der Seitenstützen 1, 2 entspricht.

Zur Verbindung zweier endseitig aufeinandergesetzter Seitenstützen entsprechend Figur 3, 4 und 7 wird zunächst der Verbindungsstecker 29 von der Vorderkante 15 der unten liegenden Seitenstütze 1 her so eingeschoben, daß sein Mittelsteg 32 mit seiner Unterseite auf der Oberkante 36 der unteren Seitenstütze aufruht, der untere Steg 34 in die Nut 28 eindringt und die Führungsanschläge 33 an dieser unteren Seitenstütze anliegen. Da die Nut 28 nach hinten hin schräg abwärts verläuft und an der rückwärtigen Kante 13 der Seitenstütze 1 geschlossen ist, ist der Verbindungsstecker 29 hierdurch sicher mit der Seitenstütze 1 verbunden. Anschließend wird die obere Seitenstütze 1 mit ihrer rückwärtigen Kante 13 in den Verbindungsstecker 29 derart eingeschoben, daß die Unterkante 25 der Seitenstütze auf der Oberseite des Mittelstegs 32 aufruht, die untere Nut 26 der Seitenstütze den oberen Steg 35 des Verbindungssteckers 29 umschließt und somit die Seitenstütze 1 zwischen der Seitenwand 31 und den Führungsanschlägen 33 des Verbindungssteckers 29 gehalten ist. Da die Nut 26 am unteren Ende der oberen Seitenstütze 1 an der Vorderkante 15 geschlossen ist, und die Nut 26 zur Horizontalen schräg nach hinten abwärts verläuft, ist hierdurch die obere Seitenstütze 1 sicher auf dem Verbindungsstecker 29 und damit auf der unteren Seitenstütze 2 gehalten.

Ein Ablösen der beiden endseitig übereinandergesetzten Seitenstützen 1, 2 erfolgt in umgekehrter Weise.

Wie dargestellt und beschrieben kann der Stapelständer in einfacher Weise aus seinen Einzelteilen (Füßen 3, Seitenstützen 1, 2, Kassettenträgern 6, Verbindungssteckern 29) von jedermann zusammengesetzt und wieder zerlegt werden. Dies ermöglicht insbesondere auch eine Verpackung und einen Versand des Stapelständers in zerlegtem, platzsparendem Zustand.

Durch Einhaltung kleiner Toleranzen, insbesondere der erwähnten Nuten 26, 28, der Stege 23, 34, 35 und der Abstände zwischen den Seitenwänden 22, 31 und den Führungsanschlägen 24, 33 ist auch ohne weiteres ein steifer Verbund der Einzelteile möglich, ohne daß der Stapelständer wackelt.

Wie im Zusammenhang mit Figur 5 erwähnt, weisen die schlitzförmigen Durchbrechungen 16, 17 in den Kassettenträgern 6 Erweiterungen 18 auf. Diese Erweiterungen nehmen, wie nunmehr ohne weiteres verständlich, die zwischen zwei endseitig aufeinandergesetzten Seitenstützen 1, 2 eingeschobenen Verbindungsstecker 29 auf. Somit können auch an den Stellen, an denen zwei Seitenstützen endseitig miteinander verbunden sind, ohne Behinderung Kassettenträger 6 angeordnet werden.

Wie bereits erwähnt, sind die Schenkel 7, 8 der Kassettenträger 6 unterschiedlich breit. Bei der (in Figur 5) dargestellten Ausführungsform ist der Schenkel 7 breiter als der Schenkel 8. Die Durchbrechungen 16, 17 sind im Scheitelbereich der Schenkel 7, 8 symmetrisch so angeordnet, daß sie sich in beide Schenkel gleich weit hinein erstrecken, daß also die Länge der Durchbrechungsabschnitte in den beiden Schenkeln 7, 8 jeweils gleich ist. Auf diese Weise können die Kassettenträger 6 in der aus Figur 2 ersichtlichen Weise in zwei Stellungen in die Seitenstützen 1, 2 eingehängt werden, indem einmal der kürzere Schenkel 8 nach oben und einmal der längere Schenkel 7 nach oben weist.

**Patentansprüche**

1. Stapelständer für Ton-, Bild- und Datenträgerkassetten mit wenigstens zwei im wesentlichen vertikal stehenden Seitenstützen (1, 2) mit wenigstens einem an diesen Seitenstützen gehaltenen, im wesentlichen horizontal verlaufenden Kassettenträger (6), wobei der Kassettenträger als Winkelprofil mit zwei im wesentlichen rechtwinklig zueinander verlaufenden Schenkeln (7, 8) ausgebildet ist, und die Schenkel derart geneigt sind, daß eine auf dem Kassettenträger (6) hochkant aufgesetzte Kassette (9) durch die Wirkung ihres Eigengewichtes von beiden Schenkeln gehalten ist,
**dadurch gekennzeichnet, daß**
die Seitenstützen (1, 2) an ihren rückwärtigen Kanten (13) sägezahnförmige Abstufungen (14) aufweisen und der Kassettenträger (6) im Scheitelbereich seiner Schenkel (7, 8) zwei beide Schenkel durchdringende, an ihren beiden Enden geschlossene Durchbrechungen (16, 17) aufweist,
und daß der Kassettenträger (6) mit den Durchbrechungen (16, 17) so über die Seitenstützen (1, 2) geschoben ist, daß das oben liegende Ende der Durchbrechungen (16, 17) auf einer Abstufung (14) aufruht und das unten liegende Ende der Durchbrechungen (16, 17) an der vorderen Kante (15) der Seitenstützen (1, 2) anliegt.

2. Stapelständer nach Anspruch 1, dadurch gekennzeichnet, daß die Seitenstützen (1, 2) an ihren unteren Enden in Füßen (3, 4) gehalten sind.

3. Stapelständer nach Anspruch 2, dadurch gekennzeichnet, daß die Seitenstützen (1, 2) an ihren unteren Enden eine untere Nut (26) und die Füße (3, 4) einen Steg (23) aufweisen, wobei der Steg (23) formschlüssig in die untere Nut (26) einschiebbar ist, und daß dem am Fuß (3, 4) vorgesehenen Steg (23) wenigstens ein Führungsanschlag (24) mit Abstand gegenüberliegt, der ein seitliches Austreten des Steges (23) aus der unteren Nut (26) verhindert.

4. Stapelständer nach Anspruch 3, dadurch gekennzeichnet, daß die untere Nut (26) an der rückwärtigen Kante (13) der Seitenstütze (1, 2) offen und an deren vorderer Kante (15) geschlossen ist.

5. Stapelständer nach Anspruch 3, dadurch gekennzeichnet, daß zur endseitigen Verbindung zweier übereinandergestellter Seitenstützen (1, 2) die Seitenstützen (1, 2) an ihrem oberen Ende zusätzlich eine obere Nut (28) aufweisen, und ein Verbindungsstecker (29) vorgesehen ist, der mit von einer Seitenwand (31) abstehenden, unteren und oberen Stegen (34, 35) sowie mit wenigstens einem den Stegen (34, 35) gegenüberliegendem Führungsanschlag (33) versehen ist, derart, daß der untere Steg (34) in die obere Nut (28) und der obere Steg (35) in die untere Nut (26) zweier endseitig aufeinandergestellter Seitenstützen einschiebbar ist, und der Führungsanschlag (33) ein seitliches Austreten der Stege (34, 35) aus den Nuten (26, 28) verhindert.

6. Stapelständer nach Anspruch 5, dadurch gekennzeichnet, daß die obere Nut (28) an der rückwärtigen Kante (13) der Seitenstütze (1, 2) geschlossen und an der vorderen Kante (15) offen ist.

7. Stapelständer nach Anspruch 1, dadurch gekennzeichnet, daß die Schenkel (7, 8) des Kassettenträgers (6) verschieden breit sind.

8. Stapelständer nach Anspruch 1, dadurch gekennzeichnet, daß die Durchbrechungen (16, 17) in den Schenkeln (7, 8) des Kassettenträgers (6) so ausgebildet sind, daß die Länge der Durchbrechungsabschnitte in den beiden Schenkeln (7, 8) jeweils gleich ist.

FIG.1

FIG.2

FIG.3

FIG. 4

FIG.5

FIG.6

FIG.7